(19) Europäisches Patentamt
European Patent Office
Office européen des brevets

(11) **EP 4 099 443 A1**

(12) **EUROPEAN PATENT APPLICATION**
published in accordance with Art. 153(4) EPC

(43) Date of publication:
**07.12.2022 Bulletin 2022/49**

(21) Application number: **21746920.4**

(22) Date of filing: **22.01.2021**

(51) International Patent Classification (IPC):
**H01M 4/36** (2006.01)   **H01M 4/505** (2010.01)
**H01M 4/525** (2010.01)

(52) Cooperative Patent Classification (CPC):
**H01M 4/36; H01M 4/505; H01M 4/525;** Y02E 60/10

(86) International application number:
**PCT/JP2021/002188**

(87) International publication number:
**WO 2021/153440 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2020 JP 2020014761**

(71) Applicant: SANYO Electric Co., Ltd.
**Daito-shi
Osaka 574-8534 (JP)**

(72) Inventors:
• **ISHIKAWA, Takayuki
Chuo-ku, Osaka-shi, Osaka 540-6207 (JP)**
• **NAGATA, Kaoru
Chuo-ku, Osaka-shi, Osaka 540-6207 (JP)**
• **MAEKAWA, Masanori
Chuo-ku, Osaka-shi, Osaka 540-6207 (JP)**

(74) Representative: **Novagraaf International SA
Chemin de l'Echo 3
1213 Onex, Geneva (CH)**

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57) A positive electrode active material for a non-aqueous electrolyte secondary battery according to an aspect of the present disclosure contains a lithium metal composite oxide having secondary particles formed by the aggregation of primary particles, wherein W is present on the surface and inside of the secondary particles of the lithium metal composite oxide. The amount of W present on the surface of the secondary particles of the lithium metal composite oxide represented by general formula $Li_\alpha Ni_a Co_b Al_c M_d W_e O_\beta$ (in the formula, $0.9 \leq \alpha \leq 1.2$, $0.8 \leq a \leq 0.96$, $0 < b \leq 0.10$, $0 < c \leq 0.10$, $0 \leq d \leq 0.1$, $0.0003 \leq e/(a+b+c+d+e) \leq 0.002$, $1.9 \leq \beta \leq 2.1$, $a+b+c+d=1$, and M is at least one element selected from among Mn, Fe, Ti, Si, Nb, Zr, Mo, and Zn) is 25-45% of the total amount of W present on the surface and inside of the secondary particles of the lithium metal composite oxide.

Figure 1

**Description**

TECHNICAL FIELD

The present disclosure relates to a positive electrode active material for non-aqueous electrolyte secondary batteries, and a non-aqueous electrolyte secondary battery.

BACKGROUND ART

In recent years, Ni-Co-based positive electrode active materials with high Ni content have been widely used for high capacity batteries. Patent Literature 1 discloses that a compound including Li and W adhered on a surface of primary particles of the Ni-Co-based positive electrode active material inhibits an increase in positive electrode resistance accompanying charge/discharge cycles.

CITATION LIST

PATENT LITERATURE

PATENT LITERATURE 1: WO2017/018099

SUMMARY

TECHNICAL PROBLEM

However, addition of W increases reactivity of the surface of the positive electrode active material to increase in reactivity to an electrolytic solution, which may result in reduction in safety, particularly in batteries using Ni-Co-based positive electrode active materials with high Ni content. Patent Literature 1 does not consider the safety of the battery, thereby still having room for improvement thereof.

Thus, an object of the present disclosure is to provide a positive electrode active material for non-aqueous electrolyte secondary batteries which contributes cycle characteristics and safety thereof.

SOLUTION TO PROBLEM

The positive electrode active material for non-aqueous electrolyte secondary batteries that is one aspect of the present disclosure includes a lithium metal composite oxide having secondary particles, each of which is formed by aggregating primary particles and having W present on a surface of the secondary particles and inside the secondary particles of the lithium metal composite oxide. The positive electrode active material is characterized in that it is represented by the formula $Li_\alpha Ni_a Co_b Al_c M_d W_e O_\beta$ where $0.9 \leq \alpha \leq 1.2$, $0.8 < a \leq 0.96$, $0 < b \leq 0.10$, $0 < c \leq 0.10$, $0 \leq d \leq 0.1$, $0.0003 \leq e/(a + b + c + d + e) \leq 0.002$, $1.9 \leq \beta \leq 2.1$, $a + b + c + d = 1$, and M is at least one element selected from the group consisting of Mn, Fe, Ti, Si, Nb, Zr, Mo, and Zn, and a proportion of W present on the surface of the secondary particles of the lithium metal composite oxide is 25% to 45% of a total amount of W present on the surface of the secondary particles and inside the secondary particles of the lithium metal composite oxide.

The non-aqueous electrolyte secondary battery that is one aspect of the present disclosure is characterized in comprising a positive electrode including the positive electrode active material for non-aqueous electrolyte secondary batteries, a negative electrode, and a non-aqueous electrolyte.

ADVANTAGEOUS EFFECTS OF INVENTION

According to one aspect of the present disclosure, it is possible to obtain a non-aqueous electrolyte secondary battery with improved cycle characteristics and safety thereof.

BRIEF DESCRIPTION OF DRAWING

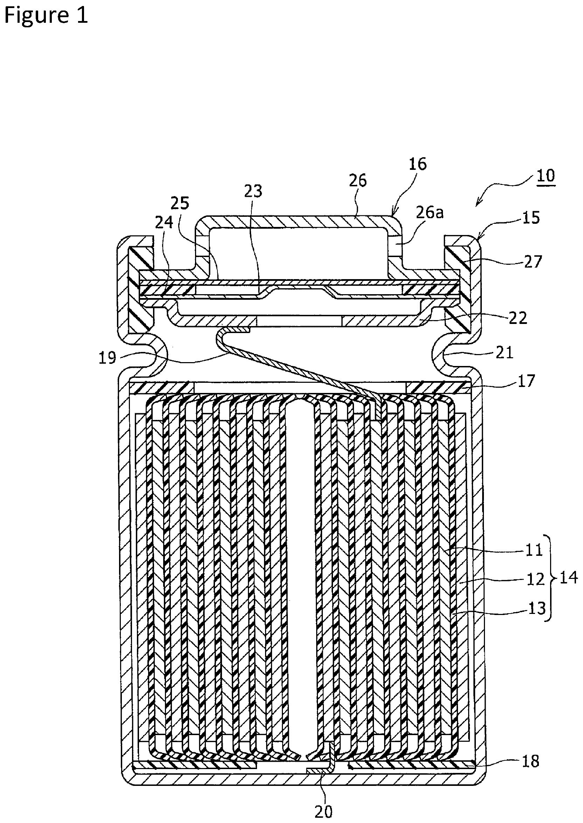

FIG. 1 is an axial sectional view of the cylindrical secondary battery according to an example of an embodiment.

DESCRIPTION OF EMBODIMENTS

Hereinafter, examples of the embodiments of the non-aqueous electrolyte secondary battery, according to the present disclosure will be described in detail. A cylindrical battery in which a wound electrode assembly is housed in a battery case is illustrated below, however, the electrode assembly is not limited to the wound type, and it may be a stacked type in which a plurality of positive electrodes and a plurality of negative electrodes may be alternately stacked one by one with separators interposed therebetween. Moreover, the battery case is not limited to a cylindrical shape, and may be, for example, a square shape, a coin shape or the like or may be a battery case formed of a laminated sheet including a metal layer and a resin layer.

FIG. 1 is an axial sectional view of a cylindrical secondary battery 10 that is an example of the embodiment. In secondary battery 10 shown in FIG. 1, an electrode assembly 14 and a non-aqueous electrolyte (not shown) are housed in an outer body 15. Electrode assembly 14 has a wound structure in which a positive electrode 11 and a negative electrode 12 are wound via a separator 13. For convenience of explanation, the side of a sealing assembly 16 will be denoted as "top" and the bottom side of outer body 15 as "bottom" below.

The inside of secondary battery 10 is sealed when an opening end of outer body 15 is clogged up by sealing assembly 16. Insulating plates 17 and 18 are arranged above and below electrode assembly 14, respectively. A positive electrode lead 19 extends upward through a through hole of insulating plate 17 and is welded to the lower surface of a filter 22 that is a bottom plate of sealing assembly 16. In secondary battery 10, a cap 26 that is a tabletop of sealing assembly 16 electrically connected to filter 22 serves as a positive electrode terminal. On the other hand, a negative electrode lead 20 extends to the bottom side of outer body 15 through a through hole of insulating plate 18 and is welded to the bottom inner surface of outer body 15. In secondary battery 10, outer body 15 serves as a negative electrode terminal. When negative electrode lead 20 is being disposed at the terminal portion, negative electrode lead 20 extends to the bottom side of outer body 15 through the outside of insulating plate 18 and is welded to the bottom inner surface of outer body 15.

Outer body 15 is, for example, a bottomed cylindrical metal outer can. A gasket 27 is arranged between outer body 15 and sealing assembly 16 to secure sealability inside secondary battery 10. Outer body 15 has a grooved portion 21 that supports sealing assembly 16, which is formed by pressing, for example, the side surface portion from the outside. Grooved portion 21 is preferably formed in an annular shape along the circumferential direction of outer body 15 and supports sealing assembly 16 on the upper surface of the grooved portion via gasket 27.

Sealing assembly 16 has a filter 22, a lower vent member 23, an insulating member 24, an upper vent member 25, and cap 26, which are stacked in this order from the electrode assembly 14 side. Each member constituting sealing assembly 16 has, for example, a disk shape or a ring shape, and each member except insulating member 24 is electrically connected to each other. Lower vent member 23 and upper vent member 25 are connected to each other at central portion thereof, and insulating member 24 is interposed between the peripheral portions of each member. When the internal pressure of the battery rises due to abnormal heat generation, for example, lower vent member 23 is broken whereby upper vent member 25 is swollen toward the cap 26 side and then is separated from lower vent member 23, resulting in the electric link therebetween being cut off. When the internal pressure further rises, upper vent member 25 is broken and a gas is discharged from the opening 26 a of cap 26.

Hereinafter, positive electrode 11, negative electrode 12, separator 13, and the non-aqueous electrolyte, constituting secondary battery 10, will be described in detail, and in particular, the positive electrode active material included in the negative electrode mixture layer constituting positive electrode 11 will be described in detail.

[Positive Electrode]

The positive electrode has, for example, a positive electrode current collector of metal foil or the like and a positive electrode mixture layer formed on the positive electrode current collector. As the positive electrode current collector, a foil of metal such as aluminum or the like that is stable in the potential range of positive electrode, or a film or the like in which the metal is arranged on the surface layer, can be used. Positive electrode mixture layer includes, for example, the positive electrode active material, a binder, a conductive agent, and the like. Positive electrode can be fabricated by coating a surface of positive electrode core with a positive electrode mixture slurry including, for example, the positive electrode active material, the binder, the conductive agent, etc., drying the coating film to form positive electrode mixture layer, and then rolling the positive electrode mixture layer.

The conductive agent included in positive electrode mixture layer includes, for example, carbon-based particles such as carbon black (CB), acetylene black (AB), Ketjen black, graphite, etc. They may be used singly or two or more thereof may be combined for use.

As the binder included in positive electrode mixture layer includes, for example, fluororesins such as polytetrafluoroethylene (PTFE) and polyvinylidene difluoride (PVdF), polyacrylonitrile (PAN), a polyimide-based resin, an acrylic resin, a polyolefin-based resin, etc. They may be used singly or two or more thereof may be combined for use.

The positive electrode active material included in the positive electrode mixture layer is a composite oxide represented by the formula $Li_\alpha Ni_a Co_b Al_c M_d W_e O_\beta$ wherein $0.9 \leq \alpha \leq 1.2$, $0.8 \leq a \leq 0.96$, $0 < b \leq 0.10$, $0 < c \leq 0.10$, $0 \leq d \leq 0.1$, $0.0003 \leq e/(a + b + c + d + e) \leq 0.002$, $1.9 \leq \beta < 2.1$, $a + b + c + d = 1$, and M is at least one element selected from the group consisting of Mn, Fe, Ti, Si, Nb, Zr, Mo, and Zn. A molar fraction of W relative to a total number of mole of the metal elements excluding Li in the positive electrode active material is 0.03 mol% to 0.2 mol% and preferably 0.04 mol% to 0.1 mol%. Here, the molar fraction of the metal elements included in the positive electrode active material is measured by inductively coupled high frequency plasma atomic emission spectroscopy (ICP-AES).

The positive electrode active material includes a lithium metal composite oxide having secondary particles, each of which is formed by aggregating primary particles, and W is present on the surface of the secondary particles and inside the secondary particles of the lithium metal composite oxide. Here, the presence of W inside the secondary particles refers to presence of W between primary particles constituting a secondary particle.

The secondary particle of the lithium metal composite oxide is a particle having a volume-based median diameter (D50) that is preferably 3 $\mu$m to 30 $\mu$m, more preferably 5 $\mu$m to 25 $\mu$m, and particularly preferably 7 $\mu$m to 15 $\mu$m. D50 refers to a particle size in which a cumulative frequency is 50% from the smallest particle size in a volume-based particle size distribution and is also called a median diameter. The particle size distribution of the secondary particle of the lithium metal composite oxide is measured by a laser diffraction type particle size distribution measuring apparatus (for example, MT3000II manufactured by MicrotracBEL Corp.) with water as a dispersion medium.

A particle size of the primary particle constituting the secondary particle is, for example, 0.05 $\mu$m to 1 $\mu$m. The particle size of primary particle is measured as a diameter of a circumscribed circle in the particle image observed by a scanning electron microscope (SEM).

The lithium metal composite oxide can be a composite oxide represented by the formula $Li_{\alpha}Ni_aCo_bAl_cM_dW_eO_{\beta}$ wherein $0.9 \leq \alpha \leq 1.2$, $0.8 \leq a \leq 0.96$, $0 < b \leq 0.10$, $0 < c \leq 0.10$, $0 \leq d \leq 0.1$, $1.9 \leq \beta < 2.1$, $a + b + c + d = 1$, and M is at least one element selected from the group consisting of Mn, Fe, Ti, Si, Nb, Zr, Mo, and Zn. By using the Ni-Co-Al-based lithium metal composite oxide, cation mixing where Ni enters a Li site can be inhibited while rendering a capacity of the battery high. The positive electrode active material may include a lithium metal composite oxide other than that represented by the above formula or other compounds, to the extent that does not impair the purpose of the present disclosure. The molar fraction of the metal elements included in the lithium metal composite oxide, is measured by ICP-AES as in the case of the positive electrode active material.

The proportion of Li in the lithium metal composite oxide, $\alpha$ preferably satisfies $0.9 \leq \alpha \leq 1.2$ and more preferably $0.95 \leq \alpha \leq 1.05$. When $\alpha$ is less than 0.9, the battery capacity may be lowered compared to the case where $\alpha$ satisfies the above range. When $\alpha$ exceeds 1.2, the charge/discharge cycle characteristics may be reduced in comparison to the case where a satisfies the above range.

The proportion of Ni relative to the total number of mole of the metal elements excluding Li in the lithium metal composite oxide, a preferably satisfies $0.8 \leq a < 0.96$ and more preferably satisfies $0.88 \leq a < 0.92$. When a is 0.8 or more, a battery of high capacity can be obtained. Moreover, when a is 0.96 or less, other elements such as Co, Al and the like can be included, enabling inhibition of cation mixing.

The proportion of Co relative to the total number of mole of the metal elements excluding Li in the lithium metal composite oxide, b preferably satisfies $0 < b \leq 0.10$ and more preferably $0.04 \leq b \leq 0.06$.

The proportion of Al relative to the total number of mole of the metal elements excluding Li in the lithium metal composite oxide, c preferably satisfies $0 < c \leq 0.10$ and more preferably $0.04 \leq c \leq 0.06$. Since Al does not change in oxidation number thereof during charge/discharge, Al included in the transition metal layer is considered to stabilize the structure of the transition metal layer. When c exceeds 0.10, Al impurities may be produced, lowering the battery capacity.

M wherein M is at least one element selected from the group consisting of Mn, Fe, Ti, Si, Nb, Zr, Mo, and Zn, is an optional component. The proportion of M relative to the total number of mole of the metal elements excluding Li in the lithium metal composite oxide, d preferably satisfies $0 \leq d \leq 0.1$.

The proportion of W present on the surface of the secondary particles of lithium metal composite oxide (hereinafter referred to as proportion of surface-located W) is 25% to 45% of the total amount of W present on the surface of the secondary particles and inside the secondary particles of lithium metal composite oxide. The proportion of surface-located W retained in this range inhibits an increase in battery resistance due to repeated charge/discharge while inhibiting a reaction with an electrolytic solution, thereby enabling inhibition of lowering in battery capacity.

The proportion of surface-located W is calculated as a percentage of an amount of W present on the surface of secondary particles relative to the total amount of W present on the surface of the secondary particles and inside the secondary particles. The total amount of W and the amount of W present on the surface of secondary particles is measured as follows:

(1) Measurement of a total amount of W present on the surface of secondary particles and inside the secondary particles.

After adding 10 mL of aqua regia dropwise into 0.2 g of positive electrode active material powder, 2.5 mL of hydrofluoric acid was added dropwise, the mixture was heated and completely dissolved to prepare an aqueous solution. The aqueous solution is diluted to 100 mL with ion-exchanged water, and the W concentration is measured by ICP-AES, the result of which yields a total amount of W present on the surface of the secondary particles and inside the secondary particles.

(2) Measurement of an amount of W present on the surface of secondary particles

Four grams of positive electrode active material powder was stirred in 400 mL of sodium hydroxide solution at a concentration of 0.01 mol/L at 40°C for 5 minutes, and then the mixture was filtered through a syringe filter with a pore size of 0.45 $\mu$m to obtain a filtrate. To 4 mL of the filtrate was added 2.5 mL of aqua regia dropwise, and then was added 0.6 mL of hydrofluoric acid dropwise, and the mixture was heated to dissolve powder remaining in the filtrate completely to prepare an aqueous solution. The aqueous solution is diluted to 100 mL with ion-exchanged water, and the W concentration is measured by ICP-AES, the result of which gives a total amount of W present on the surface of the secondary particles.

On the surface of the secondary particles and inside the secondary particles, W may be present in the form of a W compound including W. The W compound may include Li. As the W compound, tungsten oxide (WO3), lithium tungstate ($Li_2WO_4$, $Li_4WO_5$, $Li_6W_2O_9$), ammonium tungstate or the like can be exemplified.

Next, an example of the method for producing the positive electrode active material will be described.

The method for producing the positive electrode active material includes a step of mixing a composite oxide including at least Ni, Co, and Al with a Li compound and calcinating the mixture to obtain a lithium metal composite oxide, a step of washing the lithium metal composite oxide with water and dehydrating it to obtain a caky composition having a predetermined water content, and a step of mixing the caky composition with a W raw material and subjecting the mixture to heat treatment.

<Lithium metal composite oxide synthesis step>

First, a composite oxide including Ni, Co, and Al, and a Li compound such as lithium hydroxide or lithium carbonate are prepared. The composite oxide can be obtained, for example, by heat treatment of a composite hydroxide such as nickel-cobalt-aluminum composite hydroxide obtained by coprecipitation. Next, the composite oxide and the Li compound are mixed, and the mixture is calcined and then pulverized to enable lithium metal composite oxide particles to be obtained.

<Caky composition fabrication step>

Next, the lithium metal composite oxide is washed with water and dehydrated to obtain a caky composition. The lithium metal composite oxide can be used in the form of particles obtained in the synthesis steps described above. Water washing can remove unreacted portions of the Li compound added in the synthesis step of lithium metal composite oxide and impurities other than the Li compound. In water washing, for example, 300 g to 5000 g of lithium metal composite oxide can be introduced into 1 L of water. The water washing may also be repeated a plurality of times. The dehydration after water washing can be carried out, for example, by filter pressing. The dehydration conditions can adjust the water content of the caky composition after washing. The inventors have found, as a result of experimentation that lowering the water content of the caky composition can increase the proportion of W located inside the secondary particles of lithium metal composite oxide. By adjusting the water content of the caky composition after washing to a specified range, the proportion of surface-located W can be 25% to 45%. The water content of the caky composition is determined by allowing 10 g of the caky composition to stand undisturbed for drying in a vacuum at 120°C for 2 hours and dividing the resulting change in mass of the caky composition before and after the drying by the mass of the caky composition before drying for calculation of the water content.

< W addition Step>

To the caky composition was added the W raw material to obtain a tungsten added composition. A portion of the Li compound remains in the caky composition following the washing step, and on the surface of lithium metal composite oxide included in the caky composition, the remaining Li compound dissolves in the water included in the caky composition to form an alkaline aqueous solution. When the W raw material is added to the caky composition, the W raw material dissolves in the alkaline aqueous solution and spreads over the surface and inside the secondary particles of the lithium metal composite oxide. The W raw material such as tungsten oxide (WO3), lithium tungstate ($Li_2WO_4$, $Li_4WO_5$, $Li_6W_2O_9$) can be exemplified.

Furthermore, the tungsten added composition is subjected to heat treatment to prepare the positive electrode active material. The heat treatment conditions are not limited, but for example, the heat treatment temperature may be 150°C to 400°C and the heat treatment time may be 0.5 to 15 hours. The heat treatment conditions can also adjust the proportion of surface-locatedW. For example, the proportion of surface-located W can be reduced by increasing the heat treatment temperature to a more elevated temperature. In this case, it is presumed that the water content on the surface of secondary particles of lithium metal composite oxide is reduced and a reaction on the surface of secondary particles is less likely to occur, promoting a reaction inside the secondary particles.

[Negative Electrode]

The negative electrode comprises, for example, a negative electrode current collector of, for example, metal foil or the like, and a negative electrode mixture layer formed on the negative electrode current collector. As the negative electrode current collector, a foil of metal such as copper that is stable in the potential range of negative electrode, or a film or the like in which the metal is arranged on the surface layer, can be used. The negative electrode mixture layer suitably includes a negative electrode active material and preferably includes other materials such as a thickener and a binder. The negative electrode can be fabricated by for example, coating a surface of negative electrode current collector with a negative electrode mixture slurry in which the negative electrode active material, the thickener, and the binder are dispersed in water at a specific weight ratio, drying the coating film, and then rolling it to form negative electrode mixture layers on both sides of the negative electrode current collector.

The negative electrode active material that can reversibly intercalate and deintercalate lithium ions can be used, and in addition to graphite, non-graphitizable carbon, graphitizable carbon, fibrous carbon, cokes, carbon black, and the like can be used. Further, silicon, tin, and alloys and oxides mainly composed thereof can be used as non-carbon materials.

As the binder, PTFE or the like may be used as in the case of the positive electrode, however, a styrene-butadiene copolymer (SBR), a modification thereof, or the like may also be used. Carboxymethylcellulose (CMC) or the like can be used as a thickener.

[Separator]

Separator 13 that is for example, a porous sheet having ion permeability and an insulating property, is used. Specific examples of the porous sheet include a microporous membrane, a woven fabric, and a non-woven fabric. As materials of the separator, olefin-based resins such as polyethylene and polypropylene, cellulose, and the like are suitable. Separator 13 may be a laminate of thermoplastic resin fiber layers such as cellulose fiber layers and olefin-based resins. Moreover, the separator may also be a multilayered separator including a polyethylene layer and a polypropylene layer and may be a separator such that the surface of separator 13 is coated with a material such as an aramid-based resin, ceramic, or the like.

[Non-aqueous Electrolyte]

The non-aqueous electrolyte includes a non-aqueous solvent and an electrolyte salt dissolved in the non-aqueous solvent. The non-aqueous electrolyte is not limited to a liquid electrolyte (electrolytic solution) and may also be a solid electrolyte using a gel-like polymer or the like. As the non-aqueous solvent, for example, an ester, an ether, a nitrile such as acetonitrile, an amide such as dimethylformamide, or a mixed solvent of two or more of them can be used. The non-aqueous solvent may include a halogen-substituted derivative in which at least a portion of hydrogen in the solvent is substituted with a halogen atom such as fluorine.

Examples of the aforementioned esters include cyclic carbonate esters such as ethylene carbonate (EC), propylene carbonate (PC) and butylene carbonate, chain carbonate esters such as dimethyl carbonate (DMC), ethyl methyl carbonate (EMC), diethyl carbonate (DEC), methylpropyl carbonate, ethylpropyl carbonate, and methylisopropylcarbonate, cyclic carboxylic acid esters such as $\gamma$-butyrolactone and $\gamma$-valerolactone, and chain carboxylic acid esters such as methyl acetate, ethyl acetate, propyl acetate, methyl propionate (MP) and ethyl propionate.

Examples of the aforementioned ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

As the halogen-substituted derivative described above, for example, fluorinated cyclic carbonates such as fluoroethylene carbonate (FEC), a fluorinated chain carbonate, fluorinated chain carboxylic acid esters such as fluorine methyl propionate (FMP) are preferably used.

The electrolyte salt is preferably a lithium salt. Examples of lithium salts include borates such as $LiBF_4$, $LiClO_4$, $LiPF_6$, $LiAsF_6$, $LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1 < x < 6, n is 1 or 2),

$LiB_{10}Cl_{10}$, LiCl, LiBr, LiI, lithium chloroborane, lithium lower aliphatic carboxylate, $Li_2B_4O_7$, $Li(B(C_2O_4)F_2)$, and imide salts such as $LiN(SO_2CF_3)_2$ and $LiN(C_1F_{21}+_1SO_2)(C_mF_{2m}+_1SO_2)$ wherein 1 and m are integers of 1 or more. The lithium salt may be used alone, or a plurality of types may be mixed and used. Among them, LiPF6 is preferably used from the viewpoint of ionic conductivity, electrochemical stability, etc. The concentration of the lithium salt is preferably 0.8 to 1.8 mol per 1 L of the solvent.

EXAMPLES

The present disclosure will be further described below with reference to Examples, but the present disclosure is not limited to these Examples.

[Fabrication of Positive Electrode Active Material]

<Example 1>

A composite oxide represented by the general formula $Ni_{0.91}Co_{0.04}Al_{0.05}O_2$ was mixed with lithium hydroxide monohydrate ($LiOH \cdot H_2O$) so that the molar ratio of the total amount of Ni, Co, and Al, and Li was 1: 1.02 and calcinated to obtain a lithium metal composite oxide. Next, the lithium metal composite oxide obtained was washed with water and dehydrated using a filter press to obtain a caky composition having a predetermined water content. Further, to the caky composition was added $WO_3$ to obtain a W-loaded caky composition. The amount of $WO_3$ added was adjusted so that the amount of W was 0.08 mol% relative to the total number of mole of the metal elements excluding Li in the W-loaded caky composition. Furthermore, the W-loaded caky composition was heat treated from room temperature to 650°C in an oxygen stream having an oxygen concentration of 95% (a flow rate of 5L/min. per 1 kg of the mixture) at the rate of temperature rise of 2°C/min., and then heat treated from 650°C to 800°C at the rate of temperature rise of 1°C/min., to obtain the positive electrode active material of Example 1. Compositional analysis on the positive electrode active material of Example 1 by ICP-AES demonstrated that it was $LiNi_{0.91}Co_{0.04}Al_{0.05}W_{0.0008}O_2$.

[Fabrication of Positive Electrode]

Hundred parts by mass of the aforementioned positive electrode active material, 1 part by mass of acetylene black (AB) as the conductive agent, and 0.9 parts by mass of polyvinylidene difluoride (PVdF) as the binder were mixed, and further mixed with an appropriate amount of N-methyl-2-pyrrolidone (NMP) to prepare a positive electrode mixture slurry. Then, both surfaces of the positive electrode current collector made of aluminum foil were coated with the positive electrode mixture slurry, and the coating film was dried, rolled by a rolling roller, and cut to a specified electrode size to obtain a positive electrode in which positive electrode mixture layers were formed on both sides of the positive electrode core. An exposed portion of the positive electrode core with the surface exposed was arranged on a portion of the positive electrode.

[Fabrication of Negative Electrode]

The graphite and SiO were mixed so that the former was 94 parts by mass and the latter was 6 parts by mass to prepare a negative electrode active material. Ninety five parts by mass of the negative electrode active material, 3 parts by mass of carboxymethylcellulose (CMC) as the thickener, and 2 parts by mass of a styrene-butadiene rubber (SBR) as the binder were mixed and further added with an appropriate amount of water to prepare a negative electrode mixture slurry. Then, both surfaces of the negative electrode core made of copper foil were coated with the negative electrode mixture slurry, and the coating film was dried, rolled by a rolling roller, and cut to a specified electrode size to obtain a negative electrode in which negative electrode mixture layers were formed on both sides of the negative electrode core. An exposed portion of the negative electrode core with the surface exposed was arranged on a portion of the negative electrode.

[Preparation of Non-aqueous Electrolyte]

Ethylene carbonate (EC) and ethyl methyl carbonate (EMC) were mixed in a volume ratio of 30 :70. For the mixed solvent, lithium hexafluorophosphate ($LiPF_6$) was added to a concentration of 1 mol/liter to prepare a non-aqueous electrolyte.

[Fabrication of Test Cell]

An aluminum lead was attached to the exposed portion of the aforementioned positive electrode and a nickel lead was attached to the exposed portion of the aforementioned negative electrode, respectively, and the positive electrode and the negative electrodes were spirally wound with a separator made of a polyethylene microporous membrane interposed therebetween and then press-formed in the radial direction to fabricate a flattened wound electrode assembly. This electrode assembly was housed in an outer body, which then was filled with the above non-aqueous electrolyte, and the opening of the outer body was sealed to obtain a test cell.

[Cycle Test]

The aforementioned test cell was subjected to a cycle test. A discharge capacity for 1st cycle of the cycle test and a discharge capacity for 400th cycle were obtained, and the capacity retention was calculated by using the following formula:

$$\text{Capacity retention (\%)} = (\text{400th cycle discharge capacity} \div \text{1st cycle discharge}$$

$$\text{capacity}) \times 100$$

The cycle test was carried out as follows: A test cell was charged at a constant current of 0.5 It under a temperature environment of 25°C until the battery voltage reached 4.2 V, and then charged at a constant voltage of 4.2 V until the current value reached 1/50 It. Thereafter, it was discharged at a constant current of 0.5 It until the battery voltage fell down to 2.5 V. This charge/discharge cycle was repeated 400 times.

[ARC Test]

The above test cell was charged at a constant current of 0.3 It under an environment of 25°C until the battery voltage reached 4.2 V, then charged at a constant voltage of 4.2 V until the current value reached 0.05 It and was reached in charge state. The test cell in charge state above was then placed in an adiabatic runaway reaction calorimeter (ARC), a cell temperature was observed by a thermocouple attached to the test cell, and a self-heating rate (°C/min.) of the test cell was measured under adiabatic conditions. Specifically, the temperature of the test cell was measured repeatedly while raising the temperature at a rate of 5°C/min, and when the self-heating rate reached 1°C/min. on the Arrhenius plot, the measurement mode was changed to an adiabatic control mode, which was continued until self-heating occurred, and a battery temperature when the test cell reached the self-heating rate of 2°C/min was defined as a thermal runaway temperature.

<Example 2>

A test cell was fabricated and evaluated in the same manner as in Example 1 except that the water content of the caky composition was increased.

<Example 3>

A test cell was fabricated and evaluated in the same manner as in Example 1 except that the amount of $WO_3$ added was changed so that the amount of W was 0.1 mol% relative to the total number of mole of the metal elements excluding Li in the W-loaded caky composition.

<Example 4>

A test cell was fabricated and evaluated in the same manner as in Example 1 except that the amount of $WO_3$ added was changed so that the amount of W was 0.07 mol% relative to the total number of mole of the metal elements excluding Li in the W-loaded caky composition.

<Example 5>

A test cell was fabricated and evaluated in the same manner as in Example 1 except that the amount of $WO_3$ added was changed so that the amount of W was 0.05 mol% relative to the total number of mole of the metal elements excluding Li in the W-loaded caky composition.

<Example 6>

A test cell was fabricated and evaluated in the same manner as in Example 1 except that the amount of $WO_3$ added was changed so that the amount of W was 0.04 mol% relative to the total number of moles of metal elements excluding Li in the W-loaded caky composition.

<Comparative Example 1>

A test cell was fabricated and evaluated in the same manner as in Example 2 except that the water content of the caky composition was increased and the amount of $WO_3$ added was changed so that the amount of W was 0.15 mol% relative to the total number of moles of the metal elements excluding Li in the W-loaded caky composition.

<Comparative Example 2>

A test cell was fabricated and evaluated in the same manner as in Comparative Example 1 except that the amount of $WO_3$ added was changed so that the amount of W was 0.08 mol% relative to the total number of moles of the metal elements excluding Li in the W-loaded caky composition.

<Comparative Example 3>

A test cell was fabricated and evaluated in the same manner as in Example 1 except that the amount of $WO_3$ added was changed so that the amount of W was 0.03 mol% relative to the total number of moles of the metal elements excluding Li in the W-loaded caky composition.
The evaluation results of each test cell in Examples and Comparative Examples are shown in Table 1. In Table 1, the results of Examples and Comparative Examples are shown as relative values when the capacity retention (%) and the thermal runaway temperature (°C) of the test cell of Comparative Example 1 were 100. Moreover, Table 1 also shows the molar fractions of W (amounts of W added) relative to the total number of mole of the metal elements excluding Li in the W-loaded caky composition and the proportion of surface-locatedW.

[Table 1]

|  | Amount W added (mol%) | Proportion of surface-located W (%) | Capacity retention | Thermal runaway temperature |
|---|---|---|---|---|
| Example 1 | 0.08 | 30.3 | 100.4 | 105.0 |
| Example 2 | 0.08 | 34.2 | 101.4 | 102.0 |
| Example 3 | 0.10 | 41.6 | 100.6 | 100.9 |
| Example 4 | 0.07 | 33.4 | 99.4 | 102.8 |
| Example 5 | 0.05 | 26.6 | 101.3 | 102.9 |
| Example 6 | 0.04 | 29.8 | 99.8 | 103.5 |
| Comparative Example 1 | 0.15 | 48.0 | 100 | 100 |
| Comparative Example 2 | 0.08 | 46.6 | 101.3 | 100.0 |
| Comparative Example 3 | 0.03 | 23.2 | 98.9 | 99.9 |

In each of Examples 1 to 6 where the proportion of surface-located W was made smaller than that in each of Comparative Examples 1 and 2, the capacity retention increased, and the thermal runaway temperature increased. It is presumed that the proportion of surface-located W rendered smaller could inhibit the reaction on the surface of secondary particles of lithium metal composite oxide, resulting in improved cycle characteristics and safety. On the other hand, the capacity retention and thermal runaway temperature of Comparative Example 3 in which the proportion of surface-located W was less than 25%, were almost the same as those of Comparative Example 1. Therefore, from the viewpoint of cycle characteristics and safety, the proportion of surface-located W is suitable between 25% and 45%.

REFERENCE SIGNS LIST

10 secondary battery, 11 positive electrode, 12 negative electrode, 13 separator, 14 electrode assembly, 15 outer body, 16 sealing assembly, 17, 18 insulating plates, 19 positive electrode lead, 20 negative electrode lead, 21 grooved portion, 22 filter, 23 lower vent member, 24 insulating member, 25 upper vent member, 26 cap, 26a opening, 27 gasket

**Claims**

1.  A positive electrode active material for non-aqueous electrolyte secondary batteries, including:

    a lithium metal composite oxide having secondary particles, each of which is formed by aggregating primary particles and having W present on a surface of the secondary particles and inside the secondary particles of the lithium metal composite oxide, wherein
    the positive electrode active material is represented by the formula $Li_\alpha Ni_a Co_b Al_c M_d W_e O_\beta$ where $0.9 \leq \alpha \leq 1.2$, $0.8 \leq a \leq 0.96$, $0 < b \leq 0.10$, $0 < c \leq 0.10$, $0 \leq d \leq 0.1$, $0.0003 \leq e/(a+b+c+d+e) \leq 0.002$, $1.9 \leq \beta < 2.1$, $a + b + c + d = 1$, M is at least one element selected from the group consisting of Mn, Fe, Ti, Si, Nb, Zr, Mo, and Zn, and
    a proportion of W present on the surface of the secondary particles of the lithium metal composite oxide is 25% to 45% of a total amount of W present on the surface of the secondary particles and inside the secondary particles of the lithium metal composite oxide.

2.  A non-aqueous electrolyte secondary battery comprising a positive electrode including the positive electrode active material for non-aqueous electrolyte secondary batteries according to claim 1, a negative electrode, and a non-aqueous electrolyte.

# Figure 1

## INTERNATIONAL SEARCH REPORT

| International application No. |
| --- |
| PCT/JP2021/002188 |

A. CLASSIFICATION OF SUBJECT MATTER
H01M 4/36(2006.01)i; H01M 4/505(2010.01)i; H01M 4/525(2010.01)i
FI: H01M4/525; H01M4/505; H01M4/36 A

According to International Patent Classification (IPC) or to both national classification and IPC

B. FIELDS SEARCHED

Minimum documentation searched (classification system followed by classification symbols)
H01M4/36; H01M4/505; H01M4/525

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2020-17378 A (SUMITOMO METAL MINING CO., LTD.) 30 January 2020 (2020-01-30) | 1-2 |
| A | JP 2019-212400 A (SUMITOMO METAL MINING CO., LTD.) 12 December 2019 (2019-12-12) | 1-2 |
| A | JP 2019-139889 A (SUMITOMO METAL MINING CO., LTD.) 22 August 2019 (2019-08-22) | 1-2 |
| A | JP 2017-134996 A (SUMITOMO METAL MINING CO., LTD.) 03 August 2017 (2017-08-03) | 1-2 |
| A | WO 2018/142929 A1 (PANASONIC IP MANAGEMENT CO., LTD.) 09 August 2018 (2018-08-09) | 1-2 |
| A | WO 2017/169043 A1 (PANASONIC IP MANAGEMENT CO., LTD.) 05 October 2017 (2017-10-05) | 1-2 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01 April 2021 (01.04.2021) | 13 April 2021 (13.04.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT
Information on patent family members

| International application No. |
| --- |
| PCT/JP2021/002188 |

| Patent Documents referred in the Report | Publication Date | Patent Family | Publication Date |
| --- | --- | --- | --- |
| JP 2020-17378 A | 30 Jan. 2020 | (Family: none) | |
| JP 2019-212400 A | 12 Dec. 2019 | WO 2019/230829 A1 | |
| JP 2019-139889 A | 22 Aug. 2019 | (Family: none) | |
| JP 2017-134996 A | 03 Aug. 2017 | (Family: none) | |
| WO 2018/142929 A1 | 09 Aug. 2018 | CN 110073530 A | |
| WO 2017/169043 A1 | 05 Oct. 2017 | CN 108886146 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017018099 A